# EUROPÄISCHE PATENTSCHRIFT

(11) **EP 2 367 465 B1**
(45) Veröffentlichungstag und Bekanntmachung des Hinweises auf die Patenterteilung: **14.03.2018**
(21) Anmeldenummer: 09775103.6
(22) Anmeldetag: 05.12.2009
(51) Int. Cl.: A47J 31/44

(54) **KAFFEEMASCHINE**
COFFEE MACHINE
MACHINE À CAFÉ

(30) Priorität: 10.12.2008 CH 19672008
(43) Veröffentlichungstag der Anmeldung: 28.09.2011
(73) Patentinhaber: Steiner AG Weggis, 6353 Weggis (CH)
(72) Erfinder: STEINER, Adrian, CH-6353 Weggis (CH)
(74) Vertreter: Luchs, Willi
(86) Internationale Anmeldenummer: PCT/EP2009/008696
(87) Internationale Veröffentlichungsnummer: WO 2010/066387

(56) Entgegenhaltungen:
- EP-A2- 1 593 330
- WO-A1-97/27793
- US-A- 5 498 757

## Beschreibung

Die Erfindung betrifft eine Kaffeemaschine mit einem Boiler zur Erzeugung von heissem Wasser und Dampf für die Zubereitung von Kaffee- oder Milchgetränken.

Kaffeemaschinen dieser Art sind in verschiedenartigen Ausführungen bekannt. So ist beispielsweise in der EP 0 761 150 eine solche Kaffeemaschine beschrieben, die mit einem Auslasskopf für den zubereiteten Kaffee sowie Auslasshähnen zum Entnehmen von heissem Wasser bzw. Wasserdampf versehen ist. In der Praxis sind allerdings oft multifunktionale Einrichtungen gefragt, die neben dem Kaffee auch heisse bzw. kalte Milch oder Milchschaum produzieren. Dafür benötigen sie zwei verschiedene Aggregate, nämlich das eine zum Erzeugen von Kaffee und das andere zum Erzeugen von Milch bzw. Milchschaum. Solche Einrichtungen sind konstruktiv aufwendig und haben auch einen verhältnismässig hohen Energieverbrauch aufgrund der separaten Heizelementen für die Zubereitung des Kaffees einerseits und der heissen Milch bzw. des Milchschaums andererseits, zumal hierfür vielfach ein Durchlauferhitzer eingesetzt wird. Dadurch sind sie ausserdem störanfällig, weil die Milch sich dann erfahrungsgemäss leicht in der Leitung des Durchlauferhitzers anbacken kann.

Gemäss der Druckschrift WO 97/27793 ist eine Einheit zur Erzeugung von Getränkemischungen mit einer Schäumereinheit vorgesehen, welche mit Wasser gefüllt ist und Heizelemente sowie eine wendelförmige Leitung für die Erhitzung von Milch aufweist. Zudem kann zum Reinigen der Leitung Wasser vom Innern dieser boilerartigen Schäumereinheit via ein Steuerungsventil durch diese Leitung gepumpt werden. Damit wird aber das Wasser in der Schäumereinheit nicht für das Brühen des Kaffees, sondern für die Reinigung der Leitung verwendet,

Bei einem Milchschäum- und Heiz-System gemäss der Druckschrift US-A-5,498,757 ist ein Heisswassertank in einer Kaffeemaschine vorgesehen, welcher mit einem Wasserzufluss versehen ist und darin ein Heizelement, eine gewindeförmige Leitung für die Milcherhitzung, eine weitere wendelförmige Leitung für die Wassererhitzung zur Erzeugung von Kaffee enthalten ist, sowie weitere Auslassventile aufweist. Mit dieser wendelförmigen Leitung kann nur eine beschränkte Menge Wasser mit der geforderten Temperatur durchgelassen werden, womit die Leistung für die Kaffeeproduktion beschränkt ist.

Ferner besteht bei den bekannten Heizelementen der weitere Nachteil, dass diese aufgrund ihrer elementenförmigen Ausbildung nicht die notwendige Heizleistung aufbringen.

Der Erfindung liegt die Aufgabe zugrunde, diese Nachteile zu vermeiden und eine Kaffeemaschine der eingangs genannten Art zu schaffen, die energiesparend verbrauchsarm und störungsfrei sowohl Kaffee als auch heisse bzw. kalte Milch oder Milchschaumgetränke produziert.

Diese Aufgabe wird erfindungsgemäss durch die Merkmale von Anspruch 1 gelöst, wobei unter anderem die Kaffeemaschine mit einem im Boiler der Kaffeemaschine angeordneten Rohrwendel zur Erzeugung von heisser Milch oder Milchschaum versehen ist. Mit einer solchen Anordnung kann auf ein separates Heizelement für die Zubereitung der heissen Milch bzw. Milchschaums verzichtet werden, weil die Milch bzw. der Milchschaum im Rohrwendel durch das für die Kaffeezubereitung durch eine Heizschlange im Boiler erhitzte Wasser miterwärmt wird. Dies ist raumsparend und hat auch einen kostensparenden Effekt.

Die Erfindung sieht ferner vor, dass der Rohrwendel durch ein Ventil wechselweise an einen Milchbehälter oder eine Wasserquelle anschliessbar ist. Dadurch ist es mit geringem konstruktiven Aufwand möglich, den Rohrwendel nach jedem Milcherwärmungsvorgang von etwaigen Milchrückständen freizuspülen und den Betrieb unter einwandfrei hygienischen Bedingungen störungsfrei aufrechtzuerhalten.

Hierbei ist es im Sinne einer konstruktiv einfachen Anordnung erfindungsgemäss vorgesehen, dass die Pumpe der Kaffeemaschine eine wechselweise Milch oder Wasser fördern kann, wobei der Rohrwendet an den Milchbehälter bzw. die Wasserquelle über ein von der Pumpe gesteuertes Wegeventil anschliessbar ist.

Die Erfindung sieht ausserdem vor, dass die Pumpe mit einer Durchlass-Steuerung zusammenwirkt, durch welche die dem Rohrwendel jeweils zugeführte Menge Milch bzw. Wasser gesteuert wird. Durch die gesteuert dosierte Zuführung wird der Milch- und Wasserverbrauch auf das Notwendigstebeschränkt.

Es ist in diesem Sinne steuerungstechnisch zweckmässig, wenn die Förderpumpe als Zahnradpumpe ausgebildet ist, wobei die Durchlass-Steuerung in Abhängigkeit von der Tourenzahl der Pumpe einstellbar ist.

Die Erfindung sieht ebenfalls vor, dass auch Kaltmilch oder kalter Milchschaum erzeugbar ist. Durch ein zusätzliches Ventil wird die kalte Milch nicht in den Rohrwendel, sondern direkt in den Auslass geleitet.

Zweckmässigerweise ist der Rohrwendel an eine Abwasser-Auslassleitung anschliessbar, die mit ihm über ein durch die Durchlass-Steuerung betätigbares Wegeventil verbindbar ist. Die Einrichtung erhält somit einen separaten Auslass für das verunreinigte Spülwasser, der auch gegebenenfalls zum Abführen des durch den Rohrwendel geleiteten Reinigungswassers benutzt wird.

Erfindungsgemäß ist es konstructiv und wärmetechnisch von Vorteil, wenn der Boiler als vorzugsweise zylindrisches Gefäss mit einer Heizschlange ausgebildet ist, wobei der Rohrwendel darin oberhalb der Heizschlange eingebaut ist.

Erfindungsgemäß ist es ausserdem vorteilhaft, wenn die Anschlüsse des Rohrwendels und der Heizschlange auf einem Deckel des Boilers angebracht sind. Damit wird der Ein- und Ausbau der Heizschlange und des Rohrwendels sehr erleichtert.

Der Boiler kann auch als Bauteil eines heisse Milch oder Milchschaum spendenden Aggregats in vorhandene Kaffeemaschinen eingebaut werden. Damit entfällt die sonst notwendige separate Erwärmungseinrichtung für die Milch bzw. den Milchschaum.

Um den Milch-, Spülwasser- und Energieverbrauch zu optimieren, sieht die Erfindung vor, dass im Betrieb wechselweise eine vorgegebene Menge Milch oder eine vorgegebene Menge Spülwasser durch den Rohrwendel befördert Wird.

Bei Milcherwärmungseinrichtungen mit einer Zahnradpumpe als Förderpumpe ist es im Sinne einer leicht einstellbaren Steuerung der vorgegebenen Durchlassmenge zweckmässig, wenn diese durch die Tourenzahl der Pumpe in Abhängigkeit der Zeit bestimmt wird.

Die Erfindung sieht ausserdem vor, dass bei Stillstand der Pumpe der Rohrwendel mit Spülwasser gefüllt ist und dieses beim Starten der Pumpe als Abwasser abgeführt wird. Auf diese Weise wird sichergestellt, dass nach Entnahme von heisser Milch oder Milchschaum sowohl der Rohrwendel als auch die Auslassleitung von Milchrückständen frei bleiben, weil sich dann dort praktisch keine Milch anbacken kann.

In diesem Sinne ist es auch erfindungsgemäss vorgesehen, dass nach Ausserbetriebsetzen des Boilers etwa bei längeren Betriebspausen automatisch Reinigungswasser mit oder ohne Reinigungsmittel durch den Rohrwendel zirkuliert.

Die Erfindung wird nachfolgend anhand eines Ausführungsbeispiels unter Bezugnahme auf die Zeichnung näher erläutert. Es zeigen:
- Fig. 1: eine erfindungsgemässe Kaffeemaschine mit einer Einrichtung zur Erzeugung von heisser bzw. kalter Milch oder Milchschaum, schematisch dargestellt,
- Fig. 2: den Boiler der Kaffeemaschine aus Fig. 1, in der Draufsicht und vergrössert dargestellt, und
- Fig. 3: einen Schnitt entlang der Linie II-II in Fig.2.

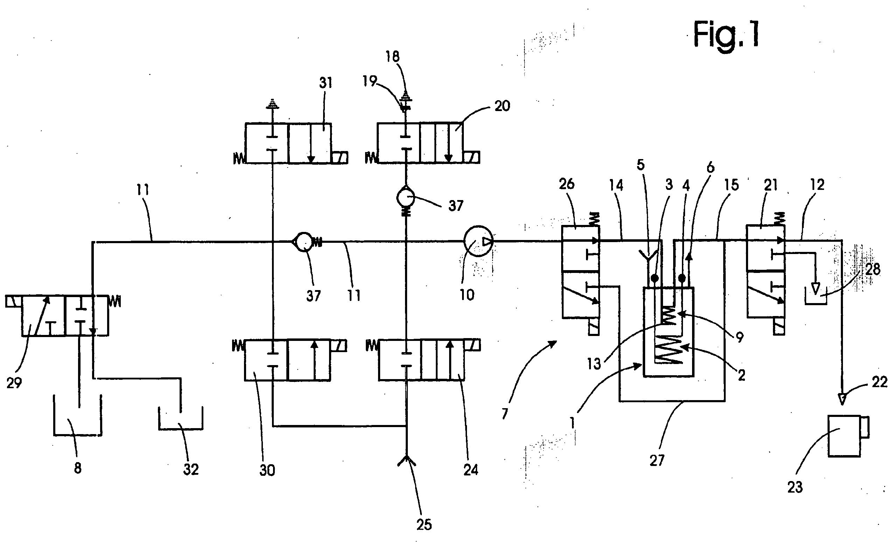

Die in der Fig. 1 gezeigte Kaffeemaschine weist eine an sich bekannte Wassererwärmungsvorrichtung auf, von der in Fig. 1 nur der Boiler 1, die Heizschlange 2 mit Anschlüssen 3, 4 sowie die Wasserzu- und -auslassleitungen 5, 6 sichtbar sind.

Die Kaffeemaschine ist ausserdem mit einer Einrichtung 7 zur Erzeugung von heisser bzw. kalter Milch oder Milchschaum ausgestattet, die sich aus einem Milchbehälter 8, einer Mitcherwärmungsvorrichtung 9, einem Umleitventil 26 zum Umleiten der kalten Milch oder Milchschaum über die Leitung 27 zum Auslass 22 und einer Pumpe 10 zusammen mit den dazugehörigen Zu- und Auslassleitungen 11, 12 zusammensetzt.

Die Milcherwärmungsvorrichtung 9 ist mit einem Rohrwendel 13 ausgerüstet, der im Boiler 1 oberhalb der Heizschlange 2 eingebaut ist und über Anschlüsse 14, 15 an die Zu- und Auslassleitungen 11, 12 anschliessbar ist.

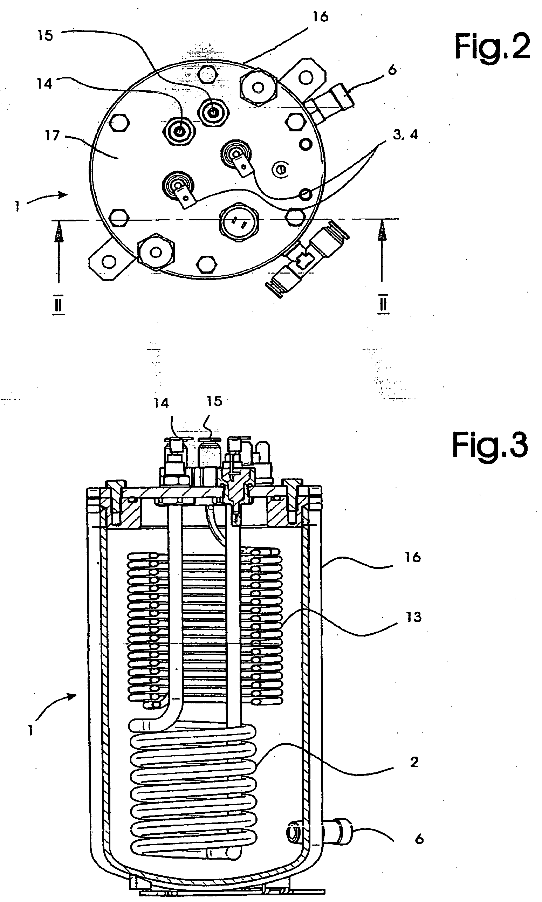

Wie aus den Fig. 2 und Fig. 3 ersichtlich, ist der Boiler 1 als ein annährend zylindrisches Gefäss 16 mit einem Deckel 17 ausgebildet. Auf diesem sind die Anschlüsse 3, 4 der Heizschlange 2 sowie die Anschlüsse 14, 15 des Rohrwendels 13 angebracht. Dadurch sind sämtliche Anschlüsse gut zugänglich. Ausserdem ist es leicht, bei Bedarf die Heizschlange und/oder den Rohrwendel nach Abnehmen Deckeis 17 auszutauschen.

Über eine Luftzufuhrleitung 18 mit einem einstellbaren Luftmengenregler 19 kann der Milch für das Aufschäumen eine bestimmte Menge Luft beigemischt werden. Zum Freigeben oder Absperren der Luftzufuhr ist ein Betätigungsventil 20 vorgesehen.

Die Milch wird von der Pumpe 10 angesaugt und durch den Rohrwendel 13 hindurchgeleitet, wo sie auf die gewünschte Temperatur durch Wärmeaustausch mit dem heissen Wasser des Boilers erhitzt wird. Anschliessend wird sie durch die Auslassleitung 12 über ein Drosselventil 21 einem heisse Milch bzw. Milchschaum spendenden Auslass 22 zugeführt und dort in einem geeigneten Behälter 23 aufgefangen.

Um den Betrieb stets störungsfrei aufrechtzuerhalten, wird dem Rohrwendel 13 - über ein Wegeventil 24 wechselweise eine bestimmte Menge Milch bzw. Milchschaum und eine bestimmte Menge Spülwasser aus einer Quelle 25 zugeleitet. Damit ist sichergestellt, dass der Rohrwendel 13 nach der Entnahme von heisser Milch oder Milchschaum jedesmal durchgespült und somit von etwaigen Milchrückständen befreit wird, so dass die Maschine stets unter einwandfrei hygienischen Bedingungen arbeitet. Dasselbe gilt auch für die Kaltmilchleitung 27, die zum Spülen über das Ventil 26 freigeschaltet werden kann. Rückschlagventile 37 sorgen dafür, dass die Milch durch die Pumpe geleitet wird.

Die Betätigung des Wegeventils 24 erfolgt über eine nicht dargestellte Durchlass-Steuerung. Das verbrauchte Spülwasser wird über das Wegeventil 21 abgeleitet, das von der nicht dargestellten Durchlass-Steuerung im Takt mit dem Wegeventil 24 betätigt wird.

Die jeweils hindurchgeleitete Menge Milch oder Milchschaum kann durch die Durchlass-Steuerung gemäss der Tourenzahl der Pumpe 10 in Abhängigkeit der Zeit eingestellt werden. Auf diese Weise ist es möglich, den Milch- und Spülwasserverbrauch zu optimieren. Darüberhinaus wird auch der Wärmebedarf des Rohrwendels 13 herabgesetzt.

Bei Inbetriebnahme der Maschine ist der Rohrwendel 13 mit Spülwasser gefüllt, das beim Starten der Förderpumpe 10 per Knopfdruck als Abwasser entfernt wird. Die Pumpe 10 befördert dann soviel Milch bzw. Milchschaum wie von der Durchlass-Steuerung vorgegeben, was durch die Tourenzahl der Pumpe in Abhängigkeit der Zeit bestimmt wird. Sobald die Milch bzw. Milchschaum durch den Rohrwendel 13 und den Auslass 22 in die Tasse oder dergleichen Behälter 23 gelangt ist, wird unmittelbar danach wieder eine vorgegebene Menge Spülwasser durchgelassen, wobei das überschüssige Wasser wieder als Abwasser 28 herausfliesst. Wenn die Förderpumpe 10 gestoppt wird, verbleibt dann das Spülwasser im Rohrwendel und in der Leitung.

Zur dauerhaften Reinigung des Rohrwendels nach Ausserbetriebsetzen der Maschine kann Reinigungsflüssigkeit von einer Quelle 8 über ein Reinigungsventil 29 indie Zufuhrleitung 11 eingeleitet und mittels der Pumpe 10 in die Auslassleitung 12 gepumpt werden, so dass beispielsweise jeden Abend nach Betriebsschluss Reinigungsflüssigkeit durch den Rohrwendel und die daran angeschlossenen Leitungen zirkuliert und somit frei von Milchrückständen sauber hält.

Ferner ist am Wassereingang 25 ein Wegeventil 30 vorgesehen, durch welches die Rückspülung in der Leitung 11 ermöglicht wird. Des weiteren kann die Leitung 11 durch das Entlüftungsventil 31 bzw. in das Abwasserbehältnis 32 entleert werden.

Zum Abführen des verbrauchten Spül- und Reinigungswassers ist eine Abwasser-Auslassleitung 28 vorgesehen. Diese ist mit der Auslassleitung 15 des Rohrwendels 13 über das Wegeventil 21 verbindbar.

Durch die Verwendung des Boilers 1 zum Erhitzen der Milch bzw. des Milchschaums ergibt sich ein geringerer Energieverbrauch gegenüber Maschinen mit zwei separaten Heizelementen für den Kaffee einerseits und für die Milch bzw. den Milchschaum andererseits. Dazu trägt auch wesentlich bei, dass die Milch bzw. der Milchschaum erfindungsgemass dosiert dem Rohrwendel zugeführt wird.

Darüberhinaus trägt die Massnahme ebenfalls dazu bei, den apparativen Umfang der Einrichtung zu verringen, weil damit etwa ein separater Durchlauferhitzer zum Erhitzen der Milch bzw. des Milchschaums entfallen kann. Ein solcher Durchlauferhitzer hätte sonst bekanntlich auch den Nachteil, dass man ihn öfters demontieren müsste, um ihn gut innen zu reinigen.

Es ist selbstverständlich jedoch nicht im Rahmen der Erfindung möglich, im Boiler 1 anstelle der Heizschlange 2 etwa einen Heizstab oder eine Wandheizung in der Boilerwandung vorzusehen. Es ist auch ohne weiteres möglich, den erfindungsgemässen Boiler in bereits vorhandene Kaffeemaschinen einzubauen.

## Patentansprüche

1. Kaffeemaschine mit einem Boiler (1) zur Erzeugung von heissem Wasser und Dampf für die Zubereitung von Kaffee- oder Milchgetränken, wobei sie mit einem im Boiler (1) angeordneten Rohrwendel (13) zur Erzeugung von heissem Milch oder Milchschaum versehen ist, **dadurch gekennzeichnet, dass**
der Boiler (1) als vorzugsweise zylindrisches Gefäss (16) mit einer Heizschlange (2) ausgebildet ist, wobei der Rohrwendel (13) darin oberhalb der Heizschlange (2) eingebaut ist, und die Anschlüsse (14, 15) der Heizschlange (2) und des Rohrwendels (13) auf einem Deckel (17) des Gefässes (16) angebracht sind.

2. Kaffeemaschine nach Anspruch 1, **dadurch gekennzeichnet, dass** der Rohrwendel (13) wechselweise an einen Milchbehälter (8) oder eine Spülwasserquelle (25) anschliessbar ist.

3. Kaffeemaschine nach Anspruch 2, **dadurch gekennzeichnet, dass** sie eine wechselweise Milch oder Spülwasser fördernde Pumpe (10) aufweist, wobei der Rohrwendel (13) an den Milchbehälter (8) bzw. die Spülwasserquelle (25) über ein von der Pumpe (10) gesteuertes Wegeventil (24) anschliessbar ist.

4. Kaffeemaschine nach Anspruch 3, **dadurch gekennzeichnet, dass** die Pumpe (10) mit einer Durchlass-Steuerung zusammenwirkt, durch welche die dem Rohrwendel (13) jeweils zugeführte Menge Milch bzw. Spülwasser gesteuert wird.

5. Kaffeemaschine nach Anspruch 4, **dadurch gekennzeichnet, dass** die Pumpe (10) als Zahnradpumpe ausgebildet ist, wobei die Durchlass-Steuerung in Abhängigkeit von der Tourenzahl der Pumpe einstellbar ist.

6. Kaffeemaschine nach einem der Ansprüche 1 bis 5, **dadurch gekennzeichnet, dass**
der Rohrwendel (13) an eine Reinigungswasser führende Leitung anschliessbar ist.

7. Kaffeemaschine nach einem der Ansprüche 4 bis 6, **dadurch gekennzeichnet, dass**
der Rohrwendel (13) an eine Abwasser-Auslassleitung anschliessbar ist, die mit ihm über ein durch die Durchlass-Steuerung betätigbares Wegeventil verbindbar ist.

8. Kaffeemaschine nach einem der Ansprüche 1 bis 7, **dadurch gekennzeichnet, dass**
der Boiler (1) mit dem Rohrwendel (13) sowie ein Umlaufventil (26) mit der Leitung (27) für Kaltmilch als Bauteil eines heisse bzw. kalte Milch oder Milchschaum spendenden Aggregats in vorhandene Kaffeemaschinen einbaubar ist.

9. Verfahren zur Erzeugung von warmen Milchgetränken oder Milchschaum in einer Kaffeemaschine nach den Ansprüchen 2 bis 7, wobei die Milch mittels einer Pumpe (10) aus einem Milchbehälter (8) durch den im Boiler (1) der Kaffeemaschine angeordneten Rohrwendel (13) zur Erhitzung der Milch befördert wird, **dadurch gekennzeichnet, dass**
im Betrieb durch die Pumpe (10) wechselweise eine vorgegebene Menge Milch oder eine vorgegebene Menge Spülwasser durch den Rohrwendel (13) befördert wird.

10. Verfahren nach Anspruch 9, wobei die Milch und das Spülwasser durch eine Zahnradpumpe (10) befördert werden, **dadurch gekennzeichnet, dass** die jeweils vorgegebene Durchlassmenge Milch bzw. Spülwasser durch die Tourenzahl der Pumpe (10) in Abhängigkeit der Zeit bestimmt wird.

11. Verfahren nach Anspruch 9, **dadurch gekennzeichnet, dass** bei Stillstand der Pumpe (10) der Rohrwendel (13) bzw. die Leitung (27) für Kaltmilch mit Spülwasser gefüllt ist und dieses beim Start der Pumpe als Abwasser abgeführt wird.

12. Verfahren nach Anspruch 9, **dadurch gekennzeichnet, dass** nach Ausserbetriebsetzen des Boilers (1) automatisch Reinigungswasser mit oder ohne Reinigungsmittel durch den Rohrwendel (13) bzw. die Leitung (27) für Kaltmilch zirkuliert.

## Claims

1. Coffee machine comprising a boiler (1) for producing hot water and steam for the preparation of coffee or milk drinks, whereas it is provided with a coiled tubing (13) disposed in the boiler (1) for producing hot milk or milk froth, **characterised in that**
the boiler (1) is in the form of a preferably cylindrical tank (16) with a heating coil (2), whereas the coiled tubing (13) being fitted in said boiler above the heating coil (2), and the connections (14, 15) of the heating coil (2) and the coiled tubing (13) are fitted onto a cover (17) of the tank (16).

2. Coffee machine according to Claim 1, **characterised in that** the coiled tubing (13) can be connected alternately to a milk container (8) or a rinsing water source (25).

3. Coffee machine according to Claim 2, **characterised in that** it has a pump (10) alternately conveying milk or rinsing water, whereas the coiled tubing (13) being connectable to the milk container (8) or to the rinsing water source (25) by a directional valve (24) controlled by the pump (10).

4. Coffee machine according to Claim 3, **characterised in that** the pump (10) co-operates with a passage control by means of which the quantity of milk or rinsing water respectively delivered to the coiled tubing (13) is controlled.

5. Coffee machine according to Claim 4, **characterised in that** the pump (10) is in the form of a geared pump, whereas the passage control being adjustable dependently upon the rotation speed of the pump.

6. Coffee machine according to any of Claims 1 to 5, **characterised in that** the coiled tubing (13) can be connected to a pipe conveying cleaning water.

7. Coffee machine according to any of Claims 4 to 6, **characterised in that** the coiled tubing (13) can be connected to a waste water outlet pipe, which can be connected to the latter by a directional valve operable by the passage control.

8. Coffee machine according to any of Claims 1 to 7, **characterised in that** the boiler (1) with the coiled tubing (13) and a bypass valve (26) with the pipe (27) for cold milk as component of a unit dispensing hot and cold milk or milk froth can be fitted into existing coffee machines.

9. Method for producing hot milk drinks or milk froth in a coffee machine according to Claims 2 to 7, whereas the milk being conveyed by means of a pump (10) from a milk container (8) through the coiled tubing (13) disposed in the boiler (1) of the coffee machine in order to heat the milk, **characterised in that**
during operation a pre-specified quantity of milk or a pre-specified quantity of rinsing water is alternately conveyed through the coiled tubing (13) by the pump (10).

10. Method according to Claim 9, whereas the milk and the rinsing water being conveyed by a geared pump (10), **characterised in that** the respectively pre-specified passage quantity of milk or rinsing water is determined by the rotation speed of the pump (10) dependently upon time.

11. Method according to Claim 9, **characterised in that** when the pump (10) is at standstill the coiled tubing (13) or the pipe (27) for cold milk is filled with rinsing water, and upon starting up the pump the latter is discharged as waste water.

12. Method according to Claim 9, **characterised in that** after taking the boiler (1) out of operation cleaning water with or without cleaning agents automatically circulates through the coiled tubing (13) or the pipe (27) for cold milk.

## Revendications

1. Machine à café, comprenant un réservoir (1) d'eau de production d'eau chaude et de vapeur pour la préparation de boisson au café ou au lait, la machine à café étant pourvue d'une spirale (13) tubulaire disposée dans le réservoir (1) d'eau pour produire du lait ou de la mousse de lait chaud, **caractérisée en ce que**
le réservoir (1) d'eau est constitué sous la forme d'un récipient (16), de préférence cylindrique, ayant un serpentin (2) de chauffage, la spirale (13) tubulaire y étant montée au dessus du serpentin (2) de chauffage, et les raccords (14, 15) du serpentin (2) de chauffage et de la spirale (13) tubulaire sont mis sur un couvercle (17) du récipient (16).

2. Machine à café suivant la revendication 1, **caractérisée en ce que**
la spirale (13) tubulaire peut être raccordée, au choix, à un réservoir (8) de lait ou à une source (25) d'eau de lavage.

3. Machine à café suivant la revendication 2, **caractérisée en ce qu'**
elle a une pompe (10) véhiculant, au choix, du lait ou de l'eau de lavage, la spirale (13) tubulaire pouvant être raccordée au réservoir (8) de lait ou à la source (25) d'eau de lavage par un distributeur (24) commandé par la pompe (10).

4. Machine à café suivant la revendication 3, **caractérisée en ce que**
la pompe (10) coopère avec une commande de passage, par laquelle la quantité de lait ou d'eau de lavage envoyée à la spirale (13) tubulaire est commandée.

5. Machine à café suivant la revendication 4, **caractérisée en ce que**
la pompe (10) est constituée sous la forme d'une pompe à engrenage, la commande de passage étant réglable en fonction du nombre de tours de la pompe.

6. Machine à café suivant l'une des revendications 1 à 5, **caractérisée en ce que**
la spirale (13) tubulaire peut être raccordée à un conduit dans lequel passe de l'eau de nettoyage.

7. Machine à café suivant l'une des revendications 4 à 6, **caractérisée en ce que**
la spirale (13) tubulaire peut être raccordée à un conduit de sortie d'eau résiduaire, qui peut être relié avec elle par un distributeur pouvant être actionné par la commande de passage.

8. Machine à café suivant l'une des revendications 1 à 7, **caractérisée en ce que**
le réservoir (1) d'eau, avec la spirale (13) tubulaire, ainsi qu'une soupape (26) de circulation, avec le conduit (27) pour du lait froid, peut, comme élément constitutif d'un groupe distribuant du lait ou de la mousse de lait chaud ou froid, être incorporé dans la machine à café présente.

9. Procédé de production de boissons lactées chaudes ou de mousse de lait dans une machine à café suivant les revendications 2 à 7, dans lequel on véhicule le lait au moyen d'une pompe (10), d'un réservoir (8) de lait par la spirale (13) tubulaire montée dans le réservoir (1) d'eau de la machine à café, pour réchauffer le lait, **caractérisé en ce que** en fonctionnement, on véhicule, par la pompe (10), au choix, une quantité donnée à l'avance de lait ou une quantité donnée à l'avance d'eau de lavage dans la spirale (13) tubulaire.

10. Procédé suivant la revendication 9, dans lequel on véhicule le lait et l'eau de lavage par une pompe (10) à engrenage, **caractérisé en ce que**
l'on détermine, en fonction du temps, la quantité de passage donnée à l'avance de lait ou d'eau de lavage par le nombre de tours de la pompe (10).

11. Procédé suivant la revendication 9, **caractérisé en ce que**, lorsque la pompe (10) est à l'arrêt, la spirale (13) tubulaire ou le conduit (27) pour le lait froid est empli d'eau de lavage et celle-ci est évacuée comme eau résiduaire au démarrage de la pompe.

12. Procédé suivant la revendication 9, **caractérisé en ce qu'** après la mise hors service du réservoir (1) d'eau, de l'eau de nettoyage circule automatiquement, avec ou sans agent de nettoyage, dans la spirale (13) tubulaire ou le conduit (27) pour du lait froid.
